# FASCICULE DE BREVET EUROPEEN

(11) **EP 2 089 158 B1**
(45) Date de publication et mention de la délivrance du brevet: **16.11.2011**
(21) Numéro de dépôt: 07871892.1
(22) Date de dépôt: 07.12.2007
(51) Int. Cl.: B01J 39/14, B01J 41/20, B01J 47/04

(54) **PROCEDE ET DISPOSITIF POUR LE TRAITEMENT D'EAU AVANT SON MELANGE AVEC UN PRODUIT DE TRAITEMENT PHYTOSANITAIRE**
VERFAHREN UND VORRICHTUNG ZUR VERARBEITUNG VON WASSER VOR DESSEN MISCHUNG MIT EINEM PHYTOSANITÄREN PRODUKT
METHOD AND DEVICE FOR PROCESSING WATER BEFORE MIXING IT WITH PHYTOSANITARY TREATMENT PRODUCT

(30) Priorité: 07.12.2006 FR 0655375; 02.01.2007 FR 0752502
(43) Date de publication de la demande: 19.08.2009
(73) Titulaire: Laboratoire De L'Agly, 66720 Latour de France (FR)
(72) Inventeur: SOLES, Germain, 66600 Calce (FR)
(74) Mandataire: Rhein, Alain
(86) Numéro de dépôt international: PCT/FR2007/052458
(87) Numéro de publication internationale: WO 2008/078030

(56) Documents cités:
- WO-A-00/16630
- J.V.: ""La qualité de l'eau est essentielle pour un bon désherbage"" JOURNAL D'INFORMATION AGRICOLES ET RURALES DE LA HAUTE-GARONNELE TRAIT D'UNION PAYSAN, 10 novembre 2006 (2006-11-10), page 11, XP002453883 France
- DATABASE WPI Week 200016 Thomson Scientific, London, GB; AN 2000-174140 XP002495532 -& JP 11 347547 A (MITSUBISHI RAYON CO LTD) 21 décembre 1999 (1999-12-21)
- ANONYMOUS: "AMBERLITE " ROHM AND HAAS PRODUCT LIST, [Online] 9 novembre 2005 (2005-11-09), XP002454272 Extrait de l'Internet: URL:http://web.archive.org/web/20051109144 048/www.rohmhaas.com/ionexchange/amberlite .htm> [extrait le 2007-10-09]
- ANONYMOUS: "AMBERLITE? IRC748 Industrial Grade Chelating Resin for Metals Removal" ROHM AND HAAS TECHNICAL DATA SHEET, [Online] octobre 2001 (2001-10), XP002454266 Extrait de l'Internet: URL:http://www.rohmhaas.com/assets/attachm ents/business/process_chemicals/amberlite_ irc/amberlite_irc748/tds/amberlite_irc748. pdf> [extrait le 2007-10-09]
- CH. BAERLOCHER, W.M. MEIER AND D.H. OLSON: "Atlas of Zeolite Framework Types" [Online] 2001, , XP002495501 ISBN: 0-444-50701-9 Extrait de l'Internet: URL:http://izasc.ethz.ch/fmi/xsl/IZA-SC/ft c_tm.xsl?-db=Atlas_main&-lay=tm&STC=LEV&-f ind> [extrait le 2008-09-11] Framework Type LEV , Pages 184-185

## Description

L'invention concerne un procédé pour la préparation avant épandage d'un produit de traitement phytosanitaire.

L'invention concerne encore un dispositif pour la mise en oeuvre d'un tel procédé.

L'invention concerne les domaines de la préparation avant épandage des produits de traitement phytosanitaire et du traitement de l'eau pour les besoins de l'agriculture.

Les agriculteurs et en particulier les arboriculteurs, maraîchers, viticulteurs ou encore céréaliers, utilisent des produits phytosanitaires pour détruire les mauvaises herbes, éradiquer différentes maladies ou détruire les insectes provoquant de gros dégâts sur leurs cultures.

Selon les recommandations des fabricants de produits phytosanitaires, ces produits de traitement chimique ne doivent pas être pulvérisés purs mais dilués dans de l'eau afin que leur épandage soit uniforme sur la terre, les feuillages ou les fruits des plants.

L'eau utilisée est généralement une eau de forage, de puits ou de source, ou encore une eau de réseau urbain.

Selon leur origine, la composition de ces eaux est très variable en particulier dans sa teneur en éléments minéraux.

Les doses homologuées de produits phytosanitaires, préconisées par les fabricants et les distributeurs, correspondent aux doses maximales autorisées, qu'il est interdit de dépasser. A la dose homologuée, un produit phytosanitaire est censé avoir une efficacité. Celle-ci ne tient cependant pas compte de la composition effective de l'eau de l'agriculteur, qui, venant à être mélangée aux produits phytosanitaires, peut avoir un impact sur l'efficacité desdits produits phytosanitaires.

Un des objets de l'invention est ainsi de proposer une solution pour améliorer l'efficacité des produits phytosanitaires préparés pour l'épandage par leur mélange à de l'eau.

Les eaux utilisées en agriculture sont également variables dans leur pH, considérées acides pour un pH inférieur à 7 et alcalines ou basiques pour un pH supérieur à 7.

Le pH de l'eau utilisée a également une influence au niveau, cette fois, des phénomènes d'hydrolyse des substances actives en fonction de certaines propriétés chimiques de ces substances actives, comme leur pKa ou leur solubilité dans l'eau.

Il est ainsi un autre objet de l'invention que d'apporter aux agriculteurs une maîtrise parfaite de certains paramètres de l'eau employée, de manière à permettre une efficacité optimale des produits phytosanitaires venant à y être mélangés.

L'invention concerne un procédé pour la préparation avant épandage d'un produit de traitement phytosanitaire, consistant à mélanger un produit de traitement phytosanitaire avec de l'eau, en particulier de forage, de puits, de source ou de réseau, caractérisé par le fait que, préalablement au mélange, on traite l'eau pour en retirer, partiellement ou entièrement, l'un au moins des cations Ca²⁺, Mg²⁺, Mn²⁺, Al ³⁺, Zn²⁺, Fe²⁺, Fe³⁺, pris seuls ou selon toutes les combinaisons entre eux, susceptibles d'altérer par leur présence l'efficacité dudit produit phytosanitaire, en faisant passer l'eau sur un lit déminéralisant formé par l'association d'une résine échangeuse d'ions cationique et d'au moins une zéolite levyne de type Si Al Ca Na K hydraté, dans une proportion de 80% de résine échangeuse d'ions et 20% de zéolite. Avantageusement, la résine échangeuse d'ions cationique est sous forme d'un gel copolymère Na⁺, notamment de type Amberlite Na+, préférentiellement avec une capacité d'échange de 2,05 eq/L de 700µm.

Selon une autre particularité de l'invention, on réalise en plus une étape d'ajustement du pH de l'eau avant mélange.

L'invention concerne encore un dispositif de traitement d'eau pour la mise en oeuvre du procédé, sous forme d'une unité de traitement comprenant une alimentation en eau à traiter, ladite eau étant issue notamment d'un forage, d'un puits, d'une source ou d'un réseau, et une évacuation de l'eau traitée, et des moyens de déminéralisation de l'eau à traiter, caractérisé par le fait que les moyens de déminéralisation sont constitués par un lit déminéralisant formé par l'association d'une résine échangeuse d'ions cationique et d'au moins une zéolite levyne de type Si Al Ca Na K hydraté, dans des proportions respectives de 80% et 20%.

Avantageusement, la résine échangeuse d'ions cationique est sous forme d'un gel copolymère Na⁺, notamment de type Amberlite Na+, préférentiellement avec une capacité d'échange de 2,05 eq/L de 700µm

Selon une autre caractéristique, le dispositif comprend en plus des moyens d'ajustement du pH de l'eau, constitués par une pompe doseuse distributrice couplée à un compteur volumétrique, et conçue apte à injecter dans l'eau une quantité mesurée d'H₂SO₄ pour un ajustement du pH à une valeur déterminée.

L'invention permet ainsi d'employer les produits phytosanitaires à leur efficacité optimale, rendant finalement possible la réduction des doses de produits phytosanitaires utilisées tout en garantissant le maintien de la même efficacité sur les cultures par rapport aux résultats antérieurs, ce qui constitue un double avantage économique et écologique.

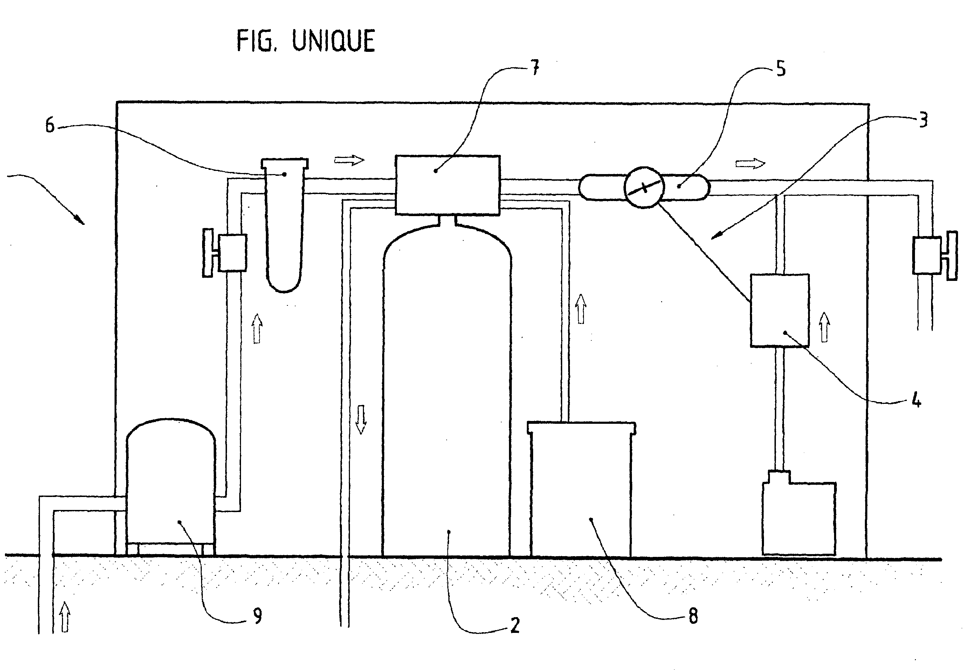

D'autres buts et avantages de la présente invention apparaîtront à la description qui va suivre, illustrée pour sa compréhension à l'aide du dessin ci-joint, représentant schématiquement un dispositif de traitement d'eau pour la mise en oeuvre du procédé selon l'invention.

La présente invention concerne le domaine du traitement de l'eau pour les besoins de l'agriculture, notamment pour la préparation avant épandage de produits de traitement phytosanitaire.

Au cours d'études en laboratoire, il est apparut un impact de la teneur avérée en éléments minéraux, sous forme d'éléments cationiques, sur la dégradation des substances actives constituant les produits phytosanitaires.

Les éléments cationiques responsables d'une telle dégradation ont été identifiés comme étant les cations Ca²⁺, Mg²⁺, Mn²⁺, Al³⁺, Zn²⁺, Fe²⁺, Fe³⁺.

Sur la base de cette constatation, il a été recherché une solution pour l'amélioration de l'efficacité de produits phytosanitaires devant être mélangés à de l'eau pour leur épandage.

C'est ainsi que l'invention a trait, plus particulièrement, à un procédé pour la préparation avant épandage d'un produit de traitement phytosanitaire.

Ce procédé prévoit le mélange d'un produit de traitement phytosanitaire avec de l'eau, en particulier de forage, de puits ou de source, avec une étape préalable de traitement de l'eau pour en retirer, partiellement ou entièrement, des espèces cationiques d'origine minérale et/ou métallique susceptibles d'altérer par leur présence l'efficacité dudit produit phytosanitaire.

Pour cela, et tel que visible sur le dessin ci-joint, on emploie un dispositif de traitement d'eau, sous forme d'une unité de traitement 1 comprenant une alimentation en eau à traiter, ladite eau étant issue notamment d'un forage, d'un puits, d'une source ou du réseau urbain, et une évacuation de l'eau traitée, et des moyens de déminéralisation 2 de l'eau à traiter. Ces moyens de déminéralisation 2 sont constitués par un lit déminéralisant 2 formé par l'association d'une résine échangeuse d'ions cationique et d'au moins une zéolite.

C'est la résine cationique échangeuse d'ions qui retient les éléments Ca²⁺ et Mg²⁺, la ou les zéolites retenant les éléments Mn²⁺, Al³⁺, Zn²⁺, Fe²⁺, Fe³⁺. La retenue s'effectue de manière partielle pour la résine cationique échangeuse d'ions et de manière totale pour la ou les zéolites.

De manière avantageuse, la résine échangeuse d'ions cationique utilisée est sous forme d'un gel copolymère Na⁺, notamment de type Amberlite Na+, préférentiellement avec une capacité d'échange de 2,05 eq/L de 700µm,

La zéolite utilisée est une zéolite levyne de type Si Al Ca Na K hydratée.

Les proportions utilisées sont de l'ordre de 80% de résine échangeuse d'ions cationique et 20% de zéolite.

La résine cationique échangeuse d'ions employée se trouve sous forme de gel et/ou billes, la zéolite étant sous forme céramique. Ceci permet avantageusement un mélange adéquat de la résine et de la zéolite, de manière à ce que lors du passage de l'eau la capture se fasse d'une façon homogène.

Un tel lit déminéralisant s'est avéré être la meilleure formulation pour éliminer les éléments que l'on souhaite retirer quelle que soit la composition de départ de l'eau. Ce point est particulièrement avantageux dans la mesure où la composition des eaux tirées des sols dépend de leur zone géographique. Par exemple en Alsace les eaux ont une charge importante en Calcium et présentent peu de Fer, les eaux de la région Aquitaine présentant un profil strictement inverse.

Avantageusement, le mélange défini pour le lit déminéralisant permet une adaptation du procédé et dispositif à tout type d'eau.

Un essai en laboratoire a été conduit afin de démontrer l'efficacité du procédé selon l'invention.

Deux types d'eaux ont été pris en considération :
- Une eau A, qui a été traitée par le procédé selon l'invention, et ne présente plus aucun élément cationique ;
- Une eau B avec comme caractéristiques du Fe²⁺ (FeCl², 4H₂O) à hauteur de 5 mg/L, du Fe³⁺ (FeCl³, 6H₂O) à hauteur de 2 mg/L, du Zn²⁺ (ZnCl²) à hauteur de 3 mg/L, du Mn²⁺ (FeSO₄H₂O) à hauteur de 5 mg/L, du Mg²⁺ (MgCl², 6H₂O) à hauteur de 200 mg/L, du Ca²⁺ (CaCl²) à hauteur de 600 mg/L, du Na⁺ (NaOH) à hauteur de 60 mg/L, du K⁺ (KCl) à hauteur de 10 mg/L, du Al³⁺ (AlCl³⁺, 6H₂O) à hauteur de 6 mg/L.

Des bouillies ont été préparées pour chacune de ces eaux avec du Folfal (dose de 700g/L, formulation Folpel), du Roténone (dose 200g/L, formulation Roténobiol), du Procymidone (dose 750g/L, formulation Sumisclex), du Dinocap (dose 210g/L, formulation Krathane LC).

Des prélèvements à TO 5 minutes après préparation et T1 à TO plus 3 heures ont été effectués, et le taux de substance active restante, non dégradé, mesuré par des techniques conventionnelles d'analyse. Les résultats figurent dans le tableau 1 ci-dessous.

**TABLEAU 1 : Résultats de l'essai en laboratoire sur la dégradation des substances actives au contact des eaux A et B.**

| | T0 | T1 | % de substance dégradée |
|---|---|---|---|
| FOLFAL | | | |
| EAU A | 1050 mg/L | 1025 mg/L | 2 |
| EAU B | 1050 mg/L | 546 mg/L | 48 |
| ROTENONE | | | |
| EAU A | 199 mg/L | 197 mg/L | 1 |
| EAU B | 199 mg/L | 80 mg/L | 60 |
| DINOCAP | | | |
| EAU A | 210 mg/L | 207 mg/L | 1 |
| EAU B | 210 mg/L | 122 mg/L | 42 |
| PROCYMIDONE | | | |
| EAU A | 750 mg/L | 746 mg/L | 1 |
| EAU B | 750 mg/L | 465 mg/L | 38 |

On voit que le procédé selon l'invention est efficace pour limiter durablement la dégradation des produits de traitement phytosanitaire mélangés avec de l'eau.

Le procédé selon l'invention prévoit encore une étape d'ajustement du pH de l'eau avant son mélange avec un produit phytosanitaire.

En effet, afin d'éviter le phénomène d'hydrolyse des substances actives constituant les produits phytosanitaires employés, il est judicieux pour l'agriculteur de pouvoir faire concorder le pH de l'eau utilisée en fonction des plages de stabilité des substances actives. De cette manière le procédé selon l'invention permet d'améliorer encore davantage l'efficacité des produits phytosanitaires employés.
Afin de remplir cet objectif, l'unité de traitement dispose encore de moyens d'ajustement 3 du pH de l'eau.

A ce propos, il a été établi que le pH de l'eau à la sortie des moyens de déminéralisation 2, situé entre 6,7 et 7,4, est suffisant pour éviter une hydrolyse des substances actives formées par des molécules neutres ou alcalines.

Cependant, le pH de l'eau doit être ajusté pour obtenir un pH aux alentours de 4,5 afin de préserver les substances actives formées par des molécules acides. Cette valeur de pH correspond en outre au pH des vacuoles des espèces végétales.

Ainsi, il a été choisi un système d'ajustement de pH par adjonction d'acide sulfurique H₂SO₄. Il apparaîtra naturel à l'homme du métier d'utiliser d'autres substances acidifiantes pour un tel but.

De la même manière, l'homme du métier pourra aisément envisager tous les moyens nécessaires pour faire varier le pH y compris vers d'autres valeurs ou des valeurs plus basiques. L'invention prévoit la possibilité d'ajuster le pH dans une gamme de 9 à 4,5.

Si l'adjonction d'H₂SO₄ peut être envisagée par une opération manuelle des agriculteurs, la sécurité préconise la réalisation de cette opération par un système automatisé.

Les moyens d'ajustement 3 du pH de l'eau sont ainsi constitués par une pompe doseuse distributrice 4. Celle-ci est couplée à un compteur volumétrique 5 en sortie des moyens de déminéralisation 2.

Enfin, la pompe doseuse distributrice 4 est conçue apte à injecter dans l'eau une quantité mesurée d'H₂SO₄ pour un ajustement du pH à une valeur déterminée, préférentiellement 4,5, le volume d'H₂SO₄ à injecter étant déterminé selon les valeurs relevées par le compteur volumétrique 5.

Afin d'éviter l'encrassage des résines, l'unité de traitement comporte en plus des moyens de retenue 6 de particules solides en suspension dans l'eau. Ces moyens de retenue 6, situés en amont des moyens de déminéralisation 2, sont constitués par un filtre à sables et limons.

De manière plus particulière, il est employé un filtre à disque de 400 µm à 100 µm pour supprimer le sable et les limons grossiers, et/ou un filtre à cartouche 20 µm pour enlever les limons fins.

L'unité de traitement 1 possède encore des moyens de contrôle 7 du débit de l'eau à l'intérieur de l'unité de traitement 1. Ces moyens de contrôle 7 sont avantageusement constitués par une tête électronique avec électrovanne à l'entrée des moyens de déminéralisation 2, permettant d'assurer l'automatisation de l'unité de traitement ainsi qu'un débit instantané de 7 à 24 m³/heure de l'installation.

L'unité de traitement 1 est encore pourvue de moyens de nettoyage 8 de la résine cationique. Celui-ci s'effectue par le biais du passage d'eau saumurée, riche en ions Na⁺ + et Cl⁻, au niveau de la résine cationique, les ions Na⁺ servant à régénérer par compétition la résine cationique. Une évacuation des chlorures résultant du nettoyage est prévue.

Avantageusement, la zéolite levyne Si Al Ca Na K employée se nettoie de la même façon par le passage d'une eau saumurée, ce qui permet une régénération de tout le lit déminéralisant par les moyens de nettoyage 8.

L'unité de traitement 1 dispose encore de moyens de contrôle 9 de la pression de l'eau, sous forme d'un surpresseur.

En effet, deux seuils minima et maxima, respectivement de 2 et 10 bars, sont à respecter pour forcer le passage de l'eau à travers l'installation et notamment le lit déminéralisant.

## Revendications

1. Procédé pour la préparation avant épandage d'un produit de traitement phytosanitaire, consistant à mélanger un produit de traitement phytosanitaire avec de l'eau, en particulier de forage, de puits, de source ou de réseau, **caractérisé par le fait que**, préalablement au mélange, on traite l'eau pour en retirer, partiellement ou entièrement, l'un au moins des cations Ca²⁺, Mg²⁺, Mn²⁺**,** Al³⁺, Zn²⁺, Fe²⁺, Fe³⁺, pris seuls ou selon toutes les combinaisons entre eux, susceptibles d'altérer par leur présence l'efficacité dudit produit phytosanitaire, en faisant passer l'eau sur un lit déminéralisant (2) formé par l'association d'une résine échangeuse d'ions cationique et d'au moins une zéolite levyne de type Si Al Ca Na K hydraté, dans une proportion de 80% de résine échangeuse d'ions et 20% de zéolite.

2. Procédé selon la revendication 1, **caractérisé par le fait que** la résine échangeuse d'ions cationique est sous forme d'un gel copolymère Na⁺, préférentiellement avec une capacité d'échange de 2,05 eq/L de 700µm.

3. Procédé selon l'une des revendications 1 ou 2, **caractérisé par le fait qu'**on réalise en plus une étape d'ajustement du pH de l'eau avant mélange.

4. Dispositif de traitement d'eau pour la mise en oeuvre du procédé selon l'une des revendications 1 à 3, sous forme d'une unité de traitement (1) comprenant une alimentation en eau à traiter, ladite eau étant issue notamment d'un forage, d'un puits, d'une source ou d'un réseau, et une évacuation de l'eau traitée, et des moyens de déminéralisation (2) de l'eau à traiter, **caractérisé par le fait que** les moyens de déminéralisation sont constitués par un lit déminéralisant formé par l'association d'une résine échangeuse d'ions cationique et d'au moins une zéolite levyne de type Si Al Ca Na K hydraté, dans des proportions respectives de 80% et 20%.

5. Dispositif de traitement d'eau selon la revendication 5, **caractérisé en ce que** la résine échangeuse d'ions cationique est sous forme d'un gel copolymère Na⁺, préférentiellement avec une capacité d'échange de 2,05 eq/L de 700µm.

6. Dispositif de traitement d'eau selon l'une des revendications 5 ou 6, **caractérisé en ce qu'**il comprend en plus des moyens d'ajustement (3) du pH de l'eau.

7. Dispositif de traitement d'eau selon la revendication 7, **caractérisé en ce que** les moyens d'ajustement (3) du pH de l'eau à traiter sont constitués par une pompe doseuse (4) distributrice couplée à un compteur volumétrique (5), et conçue apte à injecter dans l'eau une quantité mesurée d'H₂SO₄ pour un ajustement du pH à une valeur déterminée. ,

## Claims

1. Method for preparing, before spreading, a plant-protection treatment product, consisting in mixing a plant-protection treatment product with water, in particular with drilling, pit, spring or distribution-network water, wherein the water is treated before the mixing in order to partially or completely remove at least one of the following cations: Ca²⁺, Mg²⁺, Mn²⁺, Al³⁺, Zn²⁺, Fe²⁺, Fe³⁺, taken individually or in any combination with each other, likely to alter through their presence the efficiency of said plant-protection product, by causing the water to pass through a demineralizing bed (2) formed of the association of cation-exchange resin and at least one levyn zeolite of the type Si, Al, Ca, Na, K hydrate in a proportion of 80% cation-exchange resin and 20% zeolite.

2. Method according to claim 1, wherein the cation-exchange resin is in the form of a co-polymeric Na⁺ gel, preferably with an exchange capacity of 2.05 eq/l at 700 µm.

3. Method according to one of claims 1 or 2, wherein a step of adjusting the pH of the water is in addition performed before the mixing.

4. Water-treatment device for implementing the method according to one of the claims 1 to 3 in the form of a treatment unit (1), comprising a supply of water to be treated, said water proceeding namely from drilling, a pit or a source or from a distribution network, and an evacuation of treated water and means for demineralizing (2) the water to be treated, wherein the demineralizing means are formed by a demineralizing bed formed of the association of cation-exchange resin and at least one levyn zeolite of the type Si, Al, Ca, Na, K hydrate in respective proportions of 80% and 20%.

5. Water-treatment device according to claim 5, wherein the cation-exchange resin is in the form of a co-polymeric Na⁺ gel, preferably with an exchange capacity of 2.05 eq/l at 700 µm.

6. Water-treatment device according to one of claims 5 or 6, wherein it comprises in addition means for adapting (3) the pH of the water.

7. Water-treatment device according to claim 7, wherein the means for adapting (3) the pH of the water to be treated are formed by a positive displacement and distribution pump (4) connected to a volume flow meter (5) and designed capable of injecting into the water a measured quantity of H₃SO₄, in order to adjust the pH to a determined value.

## Patentansprüche

1. Verfahren für die Aufbereitung vor der Ausbringung eines Pflanzenschutzbehandlungsprodukts, darin bestehend, ein Pflanzenschutzbehandlungsprodukt mit Wasser, insbesondere mit Brunnen-, Gruben-, Quellwasser oder Wasser aus dem Wassernetz zu vermischen, **dadurch gekennzeichnet, dass** das Wasser vor dem Vermischen behandelt wird, um teilweise oder vollständig zumindest eins von folgenden Kationen: Ca²⁺, Mg²⁺, Mn²⁺, Al³⁺, Zn²⁺, Fe²⁺, Fe³⁺ zu entfernen, die einzeln oder in allen Kombinationen untereinander genommen werden, die in der Lage sind, durch ihr Vorhandensein die Wirksamkeit des besagten Pflanzenschutzprodukts zu beeinträchtigen, indem das Wasser durch ein Demineralisationsbett (2) geleitet wird, das durch den Verbund von einem Kationenaustauschharz und zumindest einem Zeolith Levyn der Art Si, Al, Ca, Na, K-Hydrat mit einem Anteilverhältnis von 80% Ionenaustauschharz und 20% Zeolith gebildet ist.

2. Verfahren nach Anspruch 1, **dadurch gekennzeichnet, dass** der Kationenaustauschharz in Form von einem Na⁺-Copolymer-Gel, vorzugsweise mit einer Austauschkapazität von 2,05 eq/l bei 700 µm, vorliegt.

3. Verfahren nach einem der Ansprüche 1 oder 2, **dadurch gekennzeichnet, dass** außerdem noch ein Arbeitsschritt zur Anpassung des pH-Werts des Wassers vor dem Vermischen durchgeführt wird.

4. Wasseraufbereitungsanlage für die Umsetzung des Verfahrens nach einem der Ansprüche 1 bis 3 in Form von einer Behandlungsanlage (1), umfassend eine Versorgung mit dem zu behandelnden Wasser, wobei das besagte Wasser insbesondere als Brunnen-, Gruben-, Quellwasser oder Wasser aus dem Wassernetz vorliegt, und eine Abführung des behandelten Wassers und Mittel zur Demineralisation (2) des zu behandelnden Wassers, **dadurch gekennzeichnet, dass** die Demineralisationsmittel durch ein Demineralisationsbett gebildet sind, das durch den Verbund von einem Kationenaustauschharz und zumindest einem Zeolith Levyn der Art Si, Al, Ca, Na, K-Hydrat in den entsprechenden Anteilverhältnissen von 80% und 20% gebildet ist.

5. Wasseraufbereitungsanlage nach Anspruch 5, **dadurch gekennzeichnet, dass** der Kationenaustauschharz in Form von einem Na⁺-Copolymer-Gel, vorzugsweise mit einer Austauschkapazität von 2,05 eq/L bei 700 µm, vorliegt.

6. Wasseraufbereitungsanlage nach einem der Ansprüche 5 oder 6, **dadurch gekennzeichnet, dass** sie außerdem Mitteln zur Anpassung (3) des pH-Werts des Wassers umfasst.

7. Wasseraufbereitungsanlage nach Anspruch 7, **dadurch gekennzeichnet, dass** die Mittel zur Anpassung (3) des pH-Werts des zu behandelnden Wassers durch eine Dosier- und Verteilerpumpe (4) gebildet sind, die an einem Volumenzähler (5) angeschlossen ist und geeignet vorgesehen ist, um ins Wasser eine gemessene Menge an H₃SO₄ einzuspritzen, um den pH-Wert einem bestimmten Wert anzupassen.
